# EUROPÄISCHE PATENTANMELDUNG

(11) **EP 4 518 116 A1**
(43) Veröffentlichungstag der Anmeldung: **05.03.2025**
(21) Anmeldenummer: 23193703.8
(22) Anmeldetag: 28.08.2023
(51) Int. Cl.: H02K 53/00

(54) **VORRICHTUNG UND VERFAHREN ZUM ANTRIEB EINER WELLE**

(71) Anmelder: Richter, Gheorghe, 2500 Siegenfeld (AT)
(72) Erfinder: Richter, Gheorghe, 2500 Siegenfeld (AT)
(74) Vertreter: Haas, Stephan

(57) **Zusammenfassung**

Bei einer Vorrichtung zum Antrieb einer Welle, umfassend einen Rotor (1) und einen Stator (2), wobei der Rotor (1) um eine Rotorachse (9) drehbar angeordnet ist und einen ersten Halbring (3) mit außen angeordnetem magnetischen Nordpol und innen angeordnetem magnetischen Südpol oder mit außen angeordnetem magnetischen Südpol und innen angeordnetem magnetischen Nordpol umfasst, wobei der Stator (2) mehrere Statormagnete (10) aufweist, die jeweils im Wesentlichen gleich ausgebildet sind, ist vorgesehen, dass die Statormagnete (10) jeweils um eine Magnetachse (11) schwenkbar angeordnet sind.

## Beschreibung

Die Erfindung betrifft eine Vorrichtung zum Antrieb einer Welle, umfassend einen Rotor und einen Stator, wobei der Rotor um eine Rotorachse drehbar angeordnet ist und einen ersten Halbring mit außen angeordnetem magnetischen Nordpol und innen angeordnetem magnetischen Südpol oder mit außen angeordnetem magnetischen Südpol und innen angeordnetem magnetischen Nordpol umfasst, wobei der Stator mehrere Statormagnete aufweist, die jeweils im Wesentlichen gleich ausgebildet sind.

Die Erfindung betrifft weiters ein Verfahren zum Antrieb einer Welle, wobei ein Rotor innerhalb eines Stators angeordnet wird, wobei der Rotor einen Halbring mit außen angeordnetem magnetischen Nordpol und innen angeordnetem magnetischen Südpol oder mit außen angeordnetem magnetischen Südpol und innen angeordnetem magnetischen Nordpol umfasst, wobei der Stator mehrere Statormagnete aufweist, die jeweils im Wesentlichen gleich ausgebildet sind und mit dem Rotor derart zusammenwirken, dass der Rotor innerhalb des Stators gedreht wird.

Aus dem Stand der Technik ist eine Vielzahl von Antrieben bekannt, die zum Antrieb einer Welle ausgebildet sind, bspw. Verbrennungsmotoren, elektrische Antriebe, pneumatische Antriebe oder hydraulische Antriebe. Diese Antriebe können einerseits zum Betrieb eines Fortbewegungsmittels, bspw. eines Fahrzeuges oder eines Flugzeuges, genutzt werden, aber andererseits auch bspw. als Stellglieder in Form eines Stellantriebes.

Weiters sind Antriebe bekannt, bei denen die Antriebsenergie durch die Anziehung bzw. Abstoßung von Permanentmagneten bereitgestellt wird. Bei Antrieben dieser Art besteht das Problem, dass die Magneten nach relativ kurzer Zeit eine Gleichgewichtslage einnehmen und anschließend bei Bedarf der Rotor erneut in die Spannungslage, bspw. manuell oder automatisiert mithilfe eines externen Mechanismus, gebracht werden muss.

Diese Antriebe können bspw. als Stellglieder eingesetzt werden, um bspw. Ventile zu schalten.

Nachteilig bei diesen bekannten Antrieben ist allerdings, dass das erreichte Drehmoment gering ist.

Es ist daher eine Aufgabe der Erfindung, eine Vorrichtung der eingangs genannten Art bereitzustellen, bei der die oben genannten Nachteile des Standes der Technik zumindest teilweise beseitigt sind. Insbesondere soll eine Vorrichtung geschaffen werden, welche ein hohes Drehmoment bereitstellen kann.

Erfindungsgemäß ist bei einer Vorrichtung der eingangs genannten Art vorgesehen, dass die Statormagnete jeweils um eine Magnetachse schwenkbar angeordnet sind. Die Statormagnete sind bevorzugt jeweils als Permanentmagnet ausgebildet.

Der Mittelpunkt bzw. Drehpunkt des Halbringes liegt in der Rotorachse. Der Halbring weist einen ersten Pol (bspw. den Südpol) an der Außenseite auf und einen zweiten Pol (den entsprechend anderen Pol, also bspw. den Nordpol) an der Innenseite. Die Innenseite ist der Rotorachse zugewandt und die Außenseite ist der Rotorachse abgewandt. Der Halbring weist einen Nordpol und einen Südpol auf, die sich jeweils im Wesentlichen über den gesamten Radius des Halbringes, also im 180°, erstrecken. Getrennt sich der Nordpol und der Südpol entlang eines Halbkreises, der parallel zu dem Halbring verläuft und diesen bevorzugt halbiert. Der Nordpol kann sowohl außen als auch innen angeordnet sein, wobei der Südpol jeweils entsprechend außen bzw. innen angeordnet ist. Die Magnetisierungsrichtung des Halbringes ist bevorzugt in Richtung Rotorachse ausgebildet. Beispielsweise weist der Halbring in tangentialer Richtung mehrere Segmente auf, die jeweils Nordpol und Südpol beinhalten und jeweils in Richtung zur Rotorachse hin magnetisiert sind. Alternativ ist die Magnetisierungsrichtung des Halbringes in Richtung eines exzentrisch angeordneten Punktes, der von der Rotorachse beabstandet ist, ausgebildet. Hierbei sind bspw. die Magnetisierungsrichtungen der einzelnen Segmente jeweils um einen Winkel zur Richtung zur Rotorachse hin verdreht. Dies ermöglicht ein höheres Drehmoment im Betrieb. Falls zwei Halbringe vorgesehen sind, die gemeinsam einen ringförmigen Rotor bilden, sind beide Halbringe entsprechend ausgebildet bzw. magnetisiert.

Der Nordpol und der Südpol eines Halbringes weisen jeweils bevorzugt im Wesentlichen die gleiche Masse auf.

Durch die Kombination eines Rotors, der zumindest einen magnetischen Halbring aufweist, mit schwenkbaren Statormagneten kann das erzielbare Drehmoment sowie auch die Laufzeit des Antriebes deutlich verbessert werden. Die schwenkbare Anordnung der Statormagnete ermöglicht es, dass die Statormagnete aufgrund der Bewegung des Rotors verschwenkt werden. Im Betrieb weisen die Statormagnete also je nach Lage des Rotors jeweils unterschiedliche Positionen relativ zum Rotor auf, wobei die Statormagnete jeweils derart angeordnet sind, dass sich die Radialkräfte in zumindest einem exzentrisch angeordneten, also von der Rotorachse beabstandeten, Aufnahmepunkt sammeln. Das erzeugte Drehmoment kann bspw. dazu dienen, an einer mit dem Rotor verbundenen Welle eine Masse über Massenträgheit mechanisch rotativ zu beschleunigen. Solche Schwungmassen zur Aufnahme, Speicherung und Abgabe von mechanischer Energie sind z.B. in Generatoren mechanischen Antrieben aller Art zu finden.

Dies ermöglicht es, dass die radialen Abstoßungs- bzw. Anziehungskräfte des Stators im Betrieb während einer gesamten Umdrehung des Rotors jeweils in einem exzentrisch angeordneten Aufnahmepunkt zusammentreffen. Die radialen Abstoßungs- bzw. Anziehungskräfte des Rotors treffen sich in einem zentrisch angeordneten Aufnahmepunkt und werden dort in einem Lager aufgenommen. Da die Kräfte des Stators im exzentrisch angeordneten Aufnahmepunkt den Kräften des zentrisch angeordneten Aufnahmepunktes des Rotors (bei der Lagerung des Rotors im Stator) entgegenwirken, bewirkt das so erzeugte Drehmoment relativ zum Stator eine Drehbewegung im Rotor. Die radial verlaufenen Anteile der Anziehungs- bzw. Abstoßungskräfte wirken jeweils in einer Richtung quer zur Rotorachse, und bewirken das Drehmoment des Rotors. An den beiden Polrichtungswechselpunkten im Ring sind beim Passieren der Statorpaarungen tangential verlaufende Kräfteanteile im Ring vorhanden. Die tangential verlaufenden Anteile der Anziehungs- bzw. Abstoßungskräfte heben einander innerhalb des Übergangsbereiches auf, da im Übergangsbereich zwischen den beiden Halbringen des Rotors Kräfte sowohl in die eine Richtung als auch in die entgegengesetzte Richtung wirken. Die Magnetachsen verlaufen bevorzugt im Wesentlichen parallel zur Rotorachse des Rotors.

Im Betrieb werden die verschwenkbaren Statormagneten so angeordnet, dass die radialen Abstoßungs- bzw. Anziehungskräfte des Stators in einem exzentrisch angeordneten Aufnahmepunkt zusammentreffen und dadurch das gewünschte Drehmoment bewirkt wird. Der Aufnahmepunkt ist je nach Position des Rotors unterschiedlich, wobei der Aufnahmepunkt bevorzugt jeweils auf einem Kreis liegt, dessen Mittelpunkt durch die Rotorachse gebildet ist.

Um die schwenkbaren Statormagnete in der gewünschten Position zu halten, ist bevorzugt vorgesehen, dass die Statormagnete jeweils mit einer gemeinsamen, relativ zur Rotorachse exzentrisch gelagerten Schwenkwelle verbunden sind. Die Verbindung zwischen den Statormagneten und der Schwenkwelle kann bspw. über Pleuelstangen erfolgen. Die Schwenkwelle ist bspw. als Hubzapfen ausgebildet. Die Verschwenkung erfolgt hierbei über einen Kurbeltrieb, der durch die exzentrisch gelagerte Schwenkwelle und die Verbindungen mit den Statormagneten gebildet ist. Die radialen Abstoßungs- bzw. Anziehungskräfte des Stators treffen hierbei in dem (exzentrisch angeordneten) Aufnahmepunkt des Kurbeltriebs (dem Hubzapfen) zusammen. Bevorzugt weist jeder Statormagnet neben der Magnetachse eine Wirkachse auf, die bspw. als Welle ausgebildet ist und mit der Schwenkwelle verbunden ist. Eine Bewegung der Schwenkwelle entlang einer Kreisbahn um die Rotorachse bedingt hierbei die Verschwenkung der einzelnen Statormagnete um die Magnetachsen, sodass die Statormagnete immer in der gewünschten Position relativ zum Rotor angeordnet sind. Insbesondere befinden sich die Wirkachsen der Statormagnete über die gesamte Drehung auf einem gemeinsamen Kreis, der exzentrisch zur Rotorachse bewegt wird. Falls äußere Statormagnete und innere Statormagnete vorgesehen sind, liegen die Wirkachsen der inneren Statormagnete auf einem gemeinsamen inneren Kreis und die Wirkachsen der äußeren Statormagnete auf einem gemeinsamen äußeren Kreis.

Besonders bevorzugt sind eine erste Schwenkwelle, die mit den inneren Statormagneten verbunden ist, und eine zweite Schwenkwelle, die mit den äußeren Statormagneten verbunden ist, vorgesehen. Die beiden Schwenkwellen sind bevorzugt miteinander verbunden und besonders bevorzugt jeweils auf einer Seite der Rotorachse angeordnet, sodass die Schwenkwellen einander gegenüberliegen. Dies ermöglicht es, die inneren und die äußeren Statormagneten jeweils einzeln anzusteuern. Dies verbessert die Wirkung der Magnetfelder im Übergangsbereich zwischen zwei Halbringen bzw. im Endbereich eines Halbringes, wenn der Rotor nur einen Halbring umfasst, und damit das erzielbare Drehmoment in diesen Bereichen.

Die Achsen der Statormagnete sind relativ zur Rotorachse starr angeordnet, sodass der Abstand zwischen den Magnetachsen und der Rotorachse bzw. dem Rotor über die Umdrehung des Rotors gleich bleibt. Der Abstand der Wirkachsen zur Rotorachse verändert sich hingegen im Laufe einer Umdrehung, sodass eine Schwenkbewegung der Statormagnete bewirkt wird. Die Schwenkwelle ist bevorzugt mit dem Rotor verbunden bzw. verbindbar, wodurch eine synchrone Bewegung der Statormagnete und des Rotors sichergestellt wird.

Bevorzugt ist vorgesehen, dass der Rotor zentrisch im Stator angeordnet ist. Dies ermöglicht einen ruhigen Lauf des Rotors im Stator. Die Rotorachse, also die Drehachse des Rotors, ist hierbei im Wesentlichen identisch mit einem Mittelpunkt bzw. einer Mittelachse des Stators. Der Stator ist bevorzugt fest angeordnet und der Rotor frei um die Rotorachse drehend. Weiters ist der Rotor mit einer anzutreibenden Welle verbindbar bzw. verbunden.

Der Rotor weist zumindest einen halbkreisförmige bzw. halbringförmige Halbring auf. Bevorzugt ist vorgesehen, dass der Rotor ringförmig ausgebildet ist und einen ersten Halbring mit außen angeordnetem magnetischen Nordpol und innen angeordnetem magnetischen Südpol sowie einen zweiten Halbring mit außen angeordnetem magnetischen Südpol und innen angeordnetem magnetischen Nordpol umfasst. Die beiden Halbringe bzw. Hälften sind also gegengleich magnetisiert und fest miteinander verbunden, sodass ein geschlossener Ring gebildet ist. Der Ring weist bevorzugt einen im Wesentlichen konstanten Außendurchmesser und einen im Wesentlichen konstanten Innendurchmesser auf. Die Trennebene zwischen den jeweiligen Nordpolen und Südpolen liegt auf einem Kreis, der zwischen dem Außendurchmesser und dem Innendurchmesser des Ringes angeordnet ist und ist bevorzugt von diesen jeweils gleich beabstandet ist.

Der (kleinste) Abstand zwischen den Statormagneten und dem Rotor ist bevorzugt bei allen Statormagneten gleich und definiert den Ringspalt. Der Ringspalt kann bspw. wenige Millimeter betragen und je nach Anforderung ausgebildet sein.

Weiters ist bevorzugt vorgesehen, dass zumindest drei Statormagnete außerhalb des Rotors angeordnet sind. Die außerhalb des Rotors angeordneten Statormagnete befinden sich hierbei auf der der Rotorachse abgewandten Seite des Rotors.

Bevorzugt ist weiters vorgesehen, dass zumindest drei Statormagnete innerhalb des Rotors angeordnet sind. Die außerhalb des Rotors angeordneten Statormagnete befinden sich hierbei auf der der Rotorachse zugewandten Seite des Rotors. Durch die ringförmige Ausbildung des Rotors ist es möglich, Statormagnete innerhalb des Rotors anzuordnen.

Um das mögliche Drehmoment weiter zu steigern, ist bevorzugt vorgesehen, dass der zumindest eine Statormagnet als Halbach-Array ausgebildet ist. Bevorzugt sind alle Statormagnete jeweils als Halbach-Array ausgebildet. Ein Halbach-Array setzt sich aus Segmenten von Permanentmagneten zusammen, deren Magnetisierungsrichtung gegeneinander jeweils insbesondere um 90° in Richtung der Längsachse des Arrays gekippt ist. Dadurch rücken die Feldlinien auf der Seite, in deren Richtung der Direktor des Feldes gekippt wird, enger zusammen, was eine Erhöhung der magnetischen Flussdichte bewirkt. Auf der gegenüberliegenden Seite liegen die Feldlinien weniger eng als im ungestörten Magneten, daher wird das Feld schon in geringem Abstand abgeschwächt bzw. verschwindet völlig, da sich Nord- und Südpole jeweils abwechseln. Hierbei weist der Statormagnet eine Seite mit starker magnetischer Flussdichte und eine Seite mit schwacher magnetischer Flussdichte auf. Bevorzugt ist vorgesehen, dass die Seite mit starker magnetischer Flussdichte auf der dem Rotor zugewandten Seite des Statormagneten ausgebildet ist. Bei einem außen angeordneten Statormagneten ist die Seite mit starker magnetischer Flussdichte auf der inneren, der Rotorachse zugewandten Seite des Statormagneten angeordnet. Bei einem innen angeordneten Statormagneten ist die Seite mit starker magnetischer Flussdichte auf der äußeren, der Rotorachse abgewandten Seite des Statormagneten angeordnet. Dies bewirkt eine weitere Verbesserung des Drehmomentes des Antriebes.

Bevorzugt ist ein Bremselement zum Bremsen bzw. Fixieren des Rotors vorgesehen. Der Rotor dreht sich im Betrieb relativ zum Stator. Um den Rotor in einer Position relativ zum Stator zu halten, in welcher ein Drehmoment auf den Stator wirkt, ist ein Bremselement nötig. Das Bremselement kann ausgebildet sein, um die Drehung des Rotors wahlweise zu blockieren bzw. freizugeben. Das Bremselement kann bspw. einen Bolzen umfassen, der wahlweise in einer Öffnung des Rotors angeordnet wird oder Bremsbacken, die wahlweise in Richtung des Rotors wirken, um diesen über Reibung zu bremsen bzw. in einer Position zu fixieren. Ein Bremselement ermöglicht es weiters, dass der erfindungsgemäße Antrieb in einer gewünschten Position fixiert werden kann, bspw. um einen Stellantrieb zu ermöglichen, oder nach Art einer Feder gespannt werden kann.

Weiters ist bevorzugt vorgesehen, dass die Magnetachsen jeweils im Wesentlichen den gleichen Abstand zur Rotorachse des Rotors aufweisen. Die Magnetachsen befinden sich (in einer Ansicht von der Seite) hierbei auf einem gedachten Kreis, dessen Mittelpunkt die Rotorachse ist. Bevorzugt ist vorgesehen, dass sich die Magnetachsen von inneren Statormagneten auf einem inneren Kreis befinden und die Magnetachsen von äußeren Statormagneten auf einem äußeren Kreis, wobei der Mittelpunkt beider Kreise die Rotorachse bildet. Diese Anordnung verbessert einerseits die Laufruhe des Rotors im Stator und andererseits das mögliche Drehmoment bzw. die mögliche Laufzeit.

Bei einer besonders bevorzugten Ausführungsform ist vorgesehen, dass zumindest drei Statormagnete außerhalb des Rotors angeordnet sind und zumindest drei Statormagnete innerhalb des Rotors angeordnet sind, wobei jedem außerhalb des Rotors angeordneten Statormagnet ein innerhalb des Rotors angeordneter Statormagnet zugeordnet ist. Bei dieser Ausführung sind Statormagnete innerhalb und außerhalb des Rotors angeordnet. Jeweils ein außerhalb des Rotors und ein innerhalb des Rotors angeordneter Statormagnet bilden ein Magnetpaar. Die beiden Statormagnete eines Magnetpaares sind einander im Wesentlichen gegenüberliegend angeordnet, also im Wesentlichen auf einer von der Rotorachse ausgehenden Geraden. Diese Anordnung verbessert das erzielbare Drehmoment, da die auf den Rotor wirkenden Magnetfelder erhöht werden.

Hierbei ist bevorzugt vorgesehen, dass die Magnetachse eines außerhalb des Rotors angeordneten Statormagneten und die Magnetachse des zugeordneten innerhalb des Rotors angeordneten Statormagneten im Wesentlichen auf einer gemeinsamen Geraden angeordnet sind. Die gemeinsame Gerade verläuft besonders bevorzugt durch die Rotorachse des Rotors. Hierdurch wird durch die beiden Statormagnete eines Magnetpaares ein besonders kraftvolles Magnetfeld bereitgestellt, wodurch sowohl das mögliche Drehmoment als auch die mögliche Laufzeit des Rotors im Stator verbessert wird.

Die Statormagnete weisen jeweils einen magnetischen Nordpol und einen magnetischen Südpol auf. Bevorzugt sind die Statormagnete länglich, bspw. stabförmig oder oval, ausgebildet, wobei sich der Nordpol und der Südpol jeweils im Wesentlichen über die gesamte Länge erstrecken.

Bevorzugt ist vorgesehen, dass die dem Rotor zugewandte Seite eines außerhalb des Rotors angeordneten Statormagneten und die dem Rotor zugewandte Seite des entsprechenden innerhalb des Rotors angeordneten Statormagneten die gleiche Polarität aufweisen. Im Betrieb werden die Kräfte der Magnetfelder, insbesondere die Radialkräfte, hierbei in einem exzentrischen Aufnahmepunkt, der von der Rotorachse beabstandet ist, gebündelt, wodurch die Drehbewegung bzw. das Drehmoment des Rotors bewirkt wird. Der Aufnahmepunkt liegt bevorzugt auf einer Achse der Schwenkwelle.

Um eine verbessertes Drehmoment zu ermöglichen, ist besonders bevorzugt vorgesehen, dass die dem Rotor zugewandte Seite eines außerhalb des Rotors angeordneten Statormagneten und die dem Rotor zugewandte Seite des entsprechenden innerhalb des Rotors angeordneten Statormagneten unterschiedliche Polaritäten aufweisen. Beispielsweise ist die dem Rotor zugewandte Seite eines außerhalb des Rotors angeordneten Statormagneten als Nordpol ausgebildet und die dem Rotor zugewandte Seite eines innerhalb des Rotors angeordneten Statormagneten als Südpol ausgebildet. Bei dieser Ausführung werden die Radialkräfte der Magnetfelder in zwei voneinander beabstandeten, exzentrisch angeordneten Aufnahmepunkten gebündelt. Bevorzugt liegen die beiden exzentrisch angeordneten Aufnahmepunkte auf einem gedachten Kreis, wobei der Mittelpunkt des Kreises im Wesentlichen die Rotorachse des Rotors ist. Weiters liegen die beiden Aufnahmepunkte bevorzugt auf einer durch die Rotorachse verlaufenden gedachten Geraden. Bevorzugt sind hierbei zwei Schwenkwellen vorgesehen, wobei die Aufnahmepunkte jeweils bevorzugt auf den Achsen der Schwenkwellen liegen.

Die Übergangsbereiche zwischen den beiden Halbringes des Rotors sind bevorzugt im Wesentlichen jeweils als Ebene ausgebildet. Die Ebene bildet hierbei die Grenzlinie zwischen dem ersten Halbring und dem zweiten Halbring. Im Querschnitt ist die Ebene bevorzugt als Gerade dargestellt, die durch die Rotorache verläuft. Bevorzugt liegen die beiden Ebenen der Übergangsbereiche auf einer (gedachten) gemeinsamen Ebene, in der auch die Rotorachse liegt. Um das Drehmoment der Vorrichtung weiter zu erhöhen, können die Übergangsbereiche auch jeweils als zweidimensional oder dreidimensional gekrümmte Ebenen ausgebildet sein.

Der zumindest eine Halbring des Rotors kann bspw. aus Eisen oder einem anderen magnetischen Material oder einem Magneten bestehen. Weiters sind im Falle einer ringförmigen Ausbildung des Rotors die beiden Halbringe im Wesentlichen gleich groß und erstrecken sich jeweils über ca. 180° des ringförmigen Rotors.

Weiters ist bei einem eingangs genannten Verfahren erfindungsgemäß vorgesehen, dass die Statormagnete während der Drehung des Rotors jeweils um eine Magnetachse geschwenkt werden. Dieses Verfahren wird bevorzugt mit einer erfindungsgemäßen Vorrichtung durchgeführt.

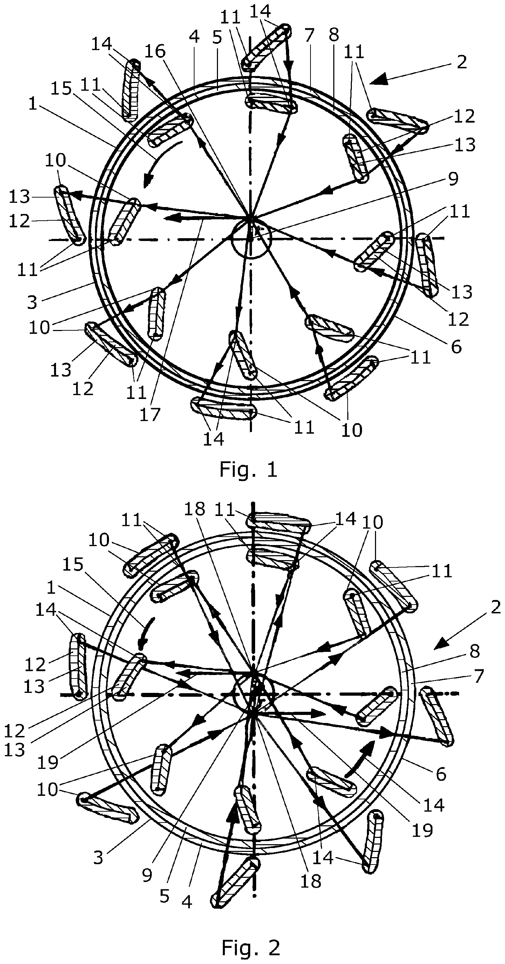

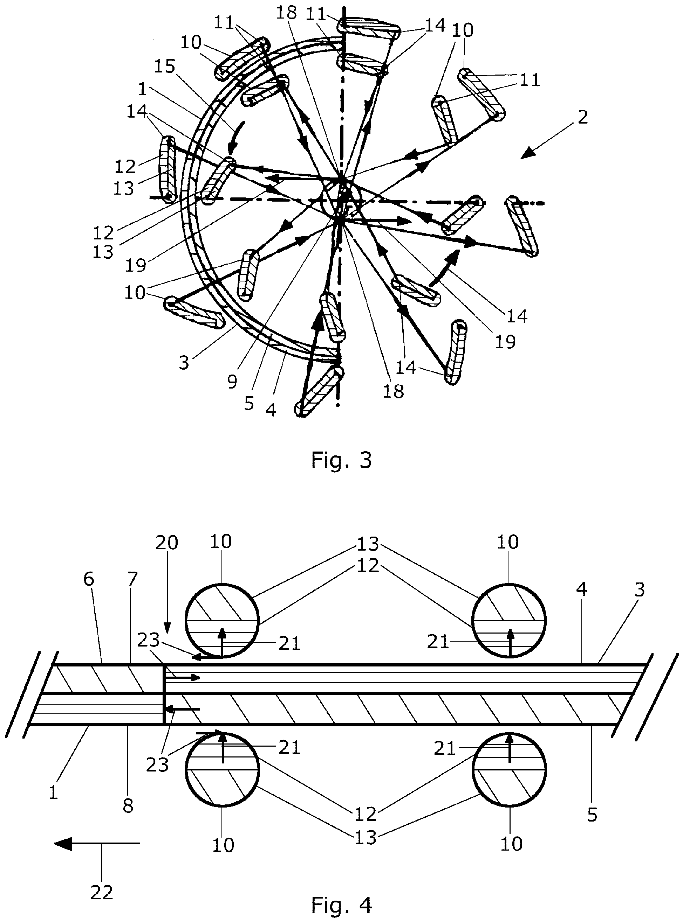

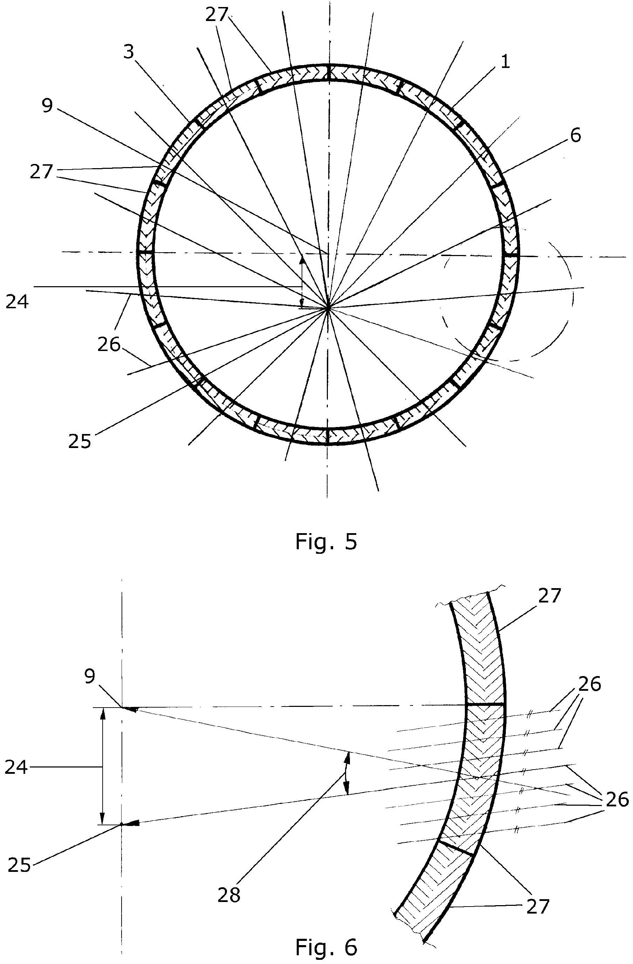

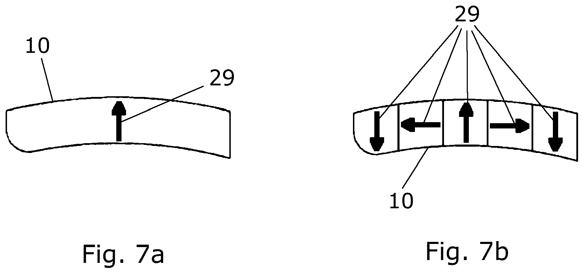

Die Erfindung wird nachfolgend anhand eines in der Zeichnung schematisch dargestellten Ausführungsbeispiels näher erläutert. In dieser zeigt Fig. 1 eine Schnittansicht einer ersten erfindungsgemäßen Vorrichtung, Fig. 2 eine Schnittansicht einer zweiten erfindungsgemäßen Vorrichtung, Fig. 3 eine Schnittansicht einer dritten erfindungsgemäßen Vorrichtung, Fig. 4 eine Darstellung des Funktionsprinzips, Fig. 5 eine Ansicht einer zweiten Ausführung eines Rotors, Fig. 6 eine Detailansicht des Rotors gemäß Fig. 5 und Fig. 7 eine Detailansicht zweier Ausführungen eines Statormagneten.

In Fig. 1 ist eine Schnittansicht einer ersten erfindungsgemäßen Vorrichtung dargestellt, umfassend einen Rotor 1 sowie einen Stator 2. Der Rotor 1 ist im Wesentlichen ringförmig ausgebildet und weist einen ersten Halbring 3 mit außen angeordnetem magnetischen Nordpol 4 und innen angeordnetem magnetischen Südpol 5 sowie einen zweiten Halbring 6 mit außen angeordnetem magnetischen Südpol 7 und innen angeordnetem magnetischen Nordpol 8 auf. Der Rotor 1 ist um eine Rotorachse 9 drehbar angeordnet und die Magnetisierungsrichtung des Rotors 1 verläuft zur Rotorachse 9 hin. Der Stator 2 umfasst mehrere außerhalb des Rotors 1 angeordnete Statormagnete 10 sowie mehrere innerhalb des Rotors 1 angeordnete Statormagnete 10, wobei jeweils ein innerhalb des Rotors 1 und ein außerhalb des Rotors 1 angeordneter Statormagnet 10 ein Magnetpaar bilden. Die Statormagnete 10 sind jeweils um eine Magnetachse 11 schwenkbar angeordnet. Die Magnetachsen 11 jeweils eines außerhalb des Rotors 1 und eines innerhalb des Rotors 1 angeordneten Statormagneten 10 liegen hierbei auf einer Geraden, die durch die Rotorachse 9 verläuft. Weiters liegen die Magnetachsen 11 der außerhalb des Rotors 1 angeordneten Statormagnete 10 im Wesentlichen auf einem äußeren Kreis, dessen Mittelpunkt die Rotorachse 9 ist. Die Magnetachsen 11 der innerhalb des Rotors 1 angeordneten Statormagnete 10 liegen ebenfalls im Wesentlichen auf einem (kleineren) inneren Kreis, dessen Mittelpunkt die Rotorachse 9 ist. Die Statormagnete 10 sind jeweils im Wesentlichen oval geformt und weisen jeweils eine Nordpolseite 12 und eine Südpolseite 13 auf. Die Nordpolseiten 12 sind jeweils horizontal strichliert und die Südpolseiten 13 sind jeweils schräg strichliert. Bei dieser Ausführung sind jeweils die Nordpolseiten 12 der Statormagnete 10 dem Rotor 1 bzw. den gegenüberliegenden Statormagneten 10 zugewandt. Die Südpolseiten 13 sind jeweils dem Rotor 1 bzw. den gegenüberliegenden Statormagneten 10 angewandt. Weiters weisen die Statormagneten 10 jeweils eine bspw. als Welle ausgebildete Wirkachse 14 auf. Die Wirkachse 14 bzw. die Welle ist über eine Pleuelstange mit einer nicht dargestellten Schwenkwelle verbunden.

Im Betrieb wird durch die Anziehungs- und Abstoßungskräfte der Statormagnete 10 und des Rotors 1 einerseits eine Verschwenkung der Statormagnete 10 und andererseits eine Drehbewegung bzw. ein Moment des Rotors 1 innerhalb des Stators 2 in Richtung des Pfeils 15 bewirkt. Hierbei wirken die einzelnen Kräfte entsprechend den Pfeilen und werden in einem exzentrischen Aufnahmepunkt 16 gesammelt, sodass eine Kraft 17 in Richtung des Pfeils 15 und damit die Drehbewegung bzw. das Moment bewirkt wird. Der Mittelpunkt der Schwenkwelle liegt im Aufnahmepunkt 16. Die Wirkachsen 14 liegen jeweils auf einem gedachten Kreis, wobei der Mittelpunkt des gedachten Kreises der Aufnahmepunkt 16 ist.

In Fig. 2 ist eine Schnittansicht einer zweiten erfindungsgemäßen Vorrichtung dargestellt. Im Unterschied zur Vorrichtung gemäß Fig. 1 sind die Südpolseiten 13 der äußeren Statormagnete 10 dem Rotor 1 bzw. den inneren Statormagneten 10 zugewandt und die Nordpolseiten 12 sind entsprechend dem Rotor 1 bzw. den inneren Statormagneten 10 abgewandt. Weiters sind die Wirkachsen 14 der inneren Statormagnete 10 mit einer ersten exzentrisch gelagerten Schwenkwelle verbunden und die Wirkachsen 14 der äußeren Statormagnete 10 sind mit einer zweiten exzentrisch gelagerten Schwenkwelle verbunden. Dies bewirkt, dass im Betrieb die magnetischen Abstoßungs- und Anziehungskräfte in zwei exzentrischen Punkten 18, die jeweils den Mittelpunkt einer Schwenkwelle bilden, gesammelt werden, sodass zwei Kräfte 19 in Richtung der Pfeile 15 und damit die Drehbewegung bzw. das Moment bewirkt wird. Durch diese Anordnung gelingt es, die Wirkung der Magnetfelder im Übergangsbereich und damit das erzielbare Drehmoment im Übergangsbereich weiter zu steigern.

In Fig. 3 ist eine Schnittansicht einer dritten erfindungsgemäßen Vorrichtung dargestellt. Im Unterschied zur Vorrichtung gemäß Fig. 2 weist der Rotor 1 lediglich einen Halbring 3 auf, die sich im Wesentlichen über 180° erstreckt.

In Fig. 4 ist das Prinzip der Bewegung des Rotors 1 relativ zum Stator 2 gezeigt. Der dargestellte Abschnitt des Rotors 1 ist der Einfachheit halber unter Zugrundelegung von Idealbedingungen zum besseren Verständnis im Wesentlichen gerade gezeigt, wobei der Übergangsbereich 20 zwischen dem ersten Halbring 3 und dem zweiten Halbring 6 zu sehen ist. Weiters sind zwei Magnetpaare, jeweils umfassend einen inneren Statormagneten 10 (unten) und einen äußeren Statormagneten 10 (oben), dargestellt. Die Statormagneten 10 sind gemäß der Ausführung nach Fig. 1 angeordnet. Der Abstand zwischen den Statormagneten 10 und dem Rotor 1 ist bei allen Statormagneten 10 gleich und definiert den Ringspalt. Die Drehbewegung des Rotors 1 erfolgt durch die radialen Kräfte 21, die aufgrund der Anziehungskräfte (im unteren Bereich um den Rotor 1) und der Abstoßungskräfte (im oberen Bereich um den Rotor 1) der Magneten in der Darstellung senkrecht nach oben wirken und welche allesamt gemeinsam den Rotor 1 entlang des Pfeils 22 nach links drücken. Im Übergangsbereich 20 sowie bei den linken Statormagneten 10 sind die tangentialen Kräfte 23 dargestellt, wobei jeweils zwei tangentiale Kräfte 23 in die gleiche Richtung wirken und alle tangentialen Kräfte 23 gleich groß sind. Dabei heben sich tangentialen Kräfte 23, die aufgrund der Anziehungskräfte (im oberen Bereich im Rotor 1) und der Abstoßungskräfte (im unteren Bereich im Rotor 1) in Bewegungsrichtung entlang des Pfeils 22 des Rotors 1 wirken, gegenseitig auf. Diese Prozesse finden gleichzeitig und spiegelverkehrt an beiden gegenüberliegenden Übergangsbereichen im Magnetring statt und wiederholen sich fortlaufend entlang der Bewegungsbahn des ringförmigen Rotors 1.

In Fig. 5 ist ein ringförmiger Rotor 1 dargestellt. Im Unterschied zu den Ausführungen gemäß Fig. 1 und Fig. 2 weist der Rotor 1 eine abweichende Magnetisierungsrichtung auf. Die Magnetisierung ist nicht Richtung Rotorachse 9 des Rotors 1 ausgerichtet, sondern in Richtung eines um Betrag 24 von der Rotorachse 9 versetzten Punktes 25. Hierbei sind die jeweiligen Magnetfeldlinien 26 der einzelnen Segmente 27 dargestellt, die einander im Punkt 25 treffen. Dies bewirkt ein größeres Drehmoment.

In Fig. 6 ist eine Detailansicht des Rotors 1 gemäß Fig. 5 dargestellt. Die Magnetfeldlinien 26 des dargestellten Segments 27 des Rotors 1 sind hierbei um einen Winkel 28 gegenüber der Richtung zur Rotorachse 9 verdreht. Dies bewirkt ein größeres Drehmoment im Betrieb. Die Magnetfeldlinien der anderen Segmente sind entsprechend um einen anderen Winkel gegenüber der Richtung zur Rotorachse 9 verdreht.

In Fig. 7 sind zwei verschiedene Ausführungen eines Statormagneten 10 gezeigt. In Fig. 7a weist der Statormagnet 10 eine einfache Magnetisierung in Richtung des Pfeils 24 zum Nordpol hin auf. Diese Statormagneten 10 sind auch in den Fig. 1 und 2 dargestellt. Der in Fig. 7b gezeigte Statormagnet 10 ist als Halbach-Array ausgebildet. Dieser Statormagnet 10 weist fünf Segmente auf, die jeweils eine unterschiedliche Magnetisierung entlang der Pfeile 24 aufweisen, wobei die Pfeile 24 jeweils in Richtung Nordpol zeigen. Die einzelnen Magnetisierungsrichtungen 24 sind jeweils um 90° zueinander versetzt. Dies bewirkt, dass auf der unteren Seite eine Flussverstärkung auftritt, wodurch die magnetische Wirkung des Statormagneten 10 verbessert wird.

## Patentansprüche

1. Vorrichtung zum Antrieb einer Welle, umfassend einen Rotor (1) und einen Stator (2), wobei der Rotor (1) um eine Rotorachse (9) drehbar angeordnet ist und einen ersten Halbring (3) mit außen angeordnetem magnetischen Nordpol und innen angeordnetem magnetischen Südpol oder mit außen angeordnetem magnetischen Südpol und innen angeordnetem magnetischen Nordpol umfasst, wobei der Stator (2) mehrere Statormagnete (10) aufweist, die jeweils im Wesentlichen gleich ausgebildet sind, **dadurch gekennzeichnet, dass** die Statormagnete (10) jeweils um eine Magnetachse (11) schwenkbar angeordnet sind.

2. Vorrichtung nach Anspruch 1, **dadurch gekennzeichnet, dass** die Magnetisierungsrichtung des ersten Halbringes (3) in Richtung Rotorachse (9) ausgebildet ist.

3. Vorrichtung nach Anspruch 1, **dadurch gekennzeichnet, dass** die Magnetisierungsrichtung des ersten Halbringes (3) in Richtung eines exzentrisch angeordneten Punktes (25), der von der Rotorachse (9) beabstandet ist, ausgebildet ist.

4. Vorrichtung nach Anspruch 1, 2 oder 3, **dadurch gekennzeichnet, dass** der Rotor (1) ringförmig ausgebildet ist und einen ersten Halbring (3) mit außen angeordnetem magnetischen Nordpol (4) und innen angeordnetem magnetischen Südpol (5) sowie einen zweiten Halbring (6) mit außen angeordnetem magnetischen Südpol (7) und innen angeordnetem magnetischen Nordpol (8) umfasst.

5. Vorrichtung nach einem der Ansprüche 1 bis 4, **dadurch gekennzeichnet, dass** zumindest drei Statormagnete (10) außerhalb des Rotors (1) angeordnet sind.

6. Vorrichtung nach einem der Ansprüche 1 bis 5, **dadurch gekennzeichnet, dass** zumindest drei Statormagnete (10) innerhalb des Rotors (1) angeordnet sind.

7. Vorrichtung nach einem der Ansprüche 1 bis 6, **dadurch gekennzeichnet, dass** zumindest ein Statormagnet (10) als Halbach-Array ausgebildet ist.

8. Vorrichtung nach einem der Ansprüche 1 bis 7, **dadurch gekennzeichnet, dass** ein Bremselement zum Bremsen bzw. Fixieren des Rotors (1) vorgesehen ist.

9. Vorrichtung nach einem der Ansprüche 1 bis 8, **dadurch gekennzeichnet, dass** die Magnetachsen (11) jeweils im Wesentlichen den gleichen Abstand zur Rotorachse (16) des Rotors (1) aufweisen.

10. Vorrichtung nach einem der Ansprüche 1 bis 9, **dadurch gekennzeichnet, dass** zumindest drei Statormagnete (10) außerhalb des Rotors (1) angeordnet sind und zumindest drei Statormagnete (10) innerhalb des Rotors (1) angeordnet sind, wobei jedem außerhalb des Rotors (1) angeordneten Statormagnet (10) ein innerhalb des Rotors (1) angeordneter Statormagnet (10) zugeordnet ist.

11. Vorrichtung nach Anspruch 10, **dadurch gekennzeichnet, dass** die Magnetachse (11) eines außerhalb des Rotors (1) angeordneten Statormagnetes (10) und die Magnetachse (11) des zugeordneten innerhalb des Rotors (1) angeordneten Statormagnetes (10) im Wesentlichen auf einer gemeinsamen Geraden angeordnet sind.

12. Vorrichtung nach Anspruch 11, **dadurch gekennzeichnet, dass** die gemeinsame Gerade durch die Rotorachse (9) des Rotors (1) verläuft.

13. Vorrichtung nach einem der Ansprüche 10 bis 12, **dadurch gekennzeichnet, dass** die dem Rotor (1) zugewandte Seite eines außerhalb des Rotors (1) angeordneten Statormagneten (10) und die dem Rotor (1) zugewandte Seite des entsprechenden innerhalb des Rotors angeordneten Statormagneten (10) die gleiche Polarität aufweisen.

14. Vorrichtung nach einem der Ansprüche 10 bis 12, **dadurch gekennzeichnet, dass** die dem Rotor (1) zugewandte Seite eines außerhalb des Rotors (1) angeordneten Statormagneten (10) und die dem Rotor (1) zugewandte Seite des entsprechenden innerhalb des Rotors (1) angeordneten Statormagneten (10) unterschiedliche Polaritäten aufweisen.

15. Verfahren zum Antrieb einer Welle, wobei ein Rotor (1) innerhalb eines Stators (2) angeordnet wird, wobei der Rotor (1) einen Halbring (3) mit außen angeordnetem magnetischen Nordpol und innen angeordnetem magnetischen Südpol oder mit außen angeordnetem magnetischen Südpol und innen angeordnetem magnetischen Nordpol umfasst, wobei der Stator (2) mehrere Statormagnete (10) aufweist, die jeweils im Wesentlichen gleich ausgebildet sind und mit dem Rotor (1) derart zusammenwirken, dass der Rotor (1) innerhalb des Stators (2) gedreht wird, **dadurch gekennzeichnet, dass** die Statormagnete (10) während der Drehung des Rotors (1) jeweils um eine Magnetachse (11) geschwenkt werden.
